# EUROPEAN PATENT SPECIFICATION

(11) **EP 1 304 671 B1**
(45) Date of publication and mention of the grant of the patent: **08.03.2006**
(21) Application number: 00948033.6
(22) Date of filing: 27.07.2000
(51) Int. Cl.: G08B 25/10, G01S 5/14

(54) **GENERAL-USE POSITION MONITORING SYSTEM THAT CAN BE USED IN ALZHEIMER'S PATIENTS**
SYSTEM ZUR ORTUNGSÜBERWACHUNG VON ALZHEIMERPATIENTEN
SYSTEME DE SUIVI DE POSITION A USAGE GENERAL POUVANT ETRE APPLIQUE AUX PERSONNES ATTEINTES DE LA MALADIE D'ALZHEIMER

(43) Date of publication of application: 23.04.2003
(73) Proprietor: Tecnosearch, S.A., 08017 Barcelona (ES)
(72) Inventor: GIRAU ESPINOSA, Alfonso, E-08017 Barcelona (ES); RUESGA ALONSO, Eduardo, E-08017 Barcelona (ES)
(74) Representative: Urizar Anasagasti, José Antonio
(86) International application number: PCT/ES2000/000283
(87) International publication number: WO 2002/013158

(56) References cited:
- WO-A1-99/57929
- DE-A1- 19 729 645
- DE-A1- 19 731 986
- DE-A1- 19 811 907
- DE-U1- 29 815 173
- ES-A1- 2 143 945
- ES-B1- 2 115 547

## Description

### Justification for the invention

The object of the present invention, as shown by its title, is related to a general-use position monitoring system that can be used for Alzheimer's patients, and patients of any other kind, children, animals, goods or, in general, beings that lack the ability to know their localisation. In particular, Alzheimer's patients suffer from a progressive loss of memory, spatio-temporal orientation and of other cognitive activities, and undergo progressive mental deterioration.

The illness actually affects two aspects, the patient himself and his family. For the former, it is medical science that must respond by progressing in the capacity of medical care. As for the family members, a system that facilitates knowledge of the exact position of patients, when they lose their orientation and memory, would in part relieve the worries of the patient's loved-ones.

Alzheimer's disease was described by Dr. Alzheimer in 1907 as an early senile-type dementia originated by hyaline degeneration in plaques of the brain cortex. Nowadays, it is known that it is a neurone degeneration and a deficit of neurotransmitters which provoke the massive and progressive destruction of information accumulated in the brain during the life of an individual, affecting their cognitive capacity. It follows a slow, progressive course for years.

The number of persons affected by this disease will predictably greatly increase due to the evolution of life expectancy and the progressive increase of its prevalence with age. Its occurrence is the third most widespread medical problem, after cancer and cardiovascular disease.
According to official data published by the Spanish Parliament and by the Department of Health upon the celebration of the National Conference on Alzheimer's:
- It currently affects 400,000 people throughout Spain.
- 5% of the population of over 65 years of age, and 15% of those over 80 years suffer from this illness in Spain.

In 25 years, it is calculated that in Spain:
- More than 8,500,000 people will be 65 years old.
- More than 2,300,000 people will be over 80 years old.

With respect to its increasing prevalence, in the next 25 years it is predicted that it will occur in:
- Up to 16% for those over 65 years.
- Up to 30% for those over 80 years.

From the aforementioned data, it can be deduced that 690,000 people of over 80 years of age and 1,360,000 people of more that 65 years of age may be affected 25 years from today.

In the U.S.A. 2.32 million patients were counted in 1997 and it is predicted that in the year 2047, one in 45 people will be affected by this illness (according to a study published by the "Journal of Public Health").

These figures give us an idea of the medical, social and human problem that is developing.

Likewise, the usefulness of the present invention is obvious for localising and rescuing other mentally ill patients or handicapped, children, animals (domesticated or other), value goods and, in general, persons or objects that lack the ability to localise themselves and to request help to be rescued or aided.

### BACKGROUND OF THE INVENTION

Patent ES 2143945 describes a system for localisation, tracking and control of fleets of vehicles and people by means of a GLS device carried by each mobile, that determines its position by means of a GPS device which is communicated to a control system via GSM. trunking, etc., where it is processed and the mobile is situated in a geographical information system. This communication is bi-directional. The system allows the tracking, setting of routes and generation of alarms for exiting from routes or areas. When the system is applied to people it is not fully autonomous and it requires the carrier intervention by means of keys or buttons, that in case of Alzheimer patients, children, animals, etc. is not viable.

Patent ES 2115547 discloses a emitter receiver system of positioning and control endowed with a microprocessor control module, a GSM communication module and a GPS module for determining the position. The control module also has other input lines for alarms and other events that if were activated, the information is sent by means of the GSM communication module together with the calculated position to an undefined centre. It also has a keyboard for introduction of validation codes. It is not autonomous for the emission of alarms because depends on external devices.

Patent DE19731986 discloses a monitor receiving signals of determined parameter amplified, processed, and forwarded to a microprocessor, keyboard, LCD screen and series terminal. It is programmed to pick-up possible anomalies from received data, below or above threshold data and is designed to control the entire monitor operation. A transceiver block of a mobile telephone is coupled to the microprocessor and contains the patient's identification code and connects automatically the hospital control exchange, when activated, for data transmission/reception and speaking. A GPS block is coupled to the processor and GSM block and is activated by the control exchange. It is not autonomous for the emission of alarms because depends on external devices like biological parameter monitors.

Patent DE19729645 discloses an instrument carried on the body for the radio transmission of a distress call signal to a mobile radio (GSM) network receiver, through reception/transmission stations. These stations receive each distress call and transfer the signal to a main office. The current local position and person are identified, stored and displayed by computer and monitor. An inquiry as to the current local position of the instrument by a GPS-units may be made. Triggering the emergency call may be by keyboard, trigger button or release with draw cord, or sensor inside the personal unit. It is not autonomous for the emission of alarms because it depends on external actions and could not be programmed to cover an area.

Patent DE19811907 discloses a system for person monitoring using an electronic unit with a GPS receiver connected to a modified GSM mobile telephone for localising, finding direction of, and giving out coordinates, so that person is automatically followed, and an alarm is set off which may be transmitted over a modem to further receivers. The electronic unit is not autonomous in determining when it is inside a predefined route thus overloading the control centre with the task of tracking everybody everywhere.

### Object of the invention

The object of the present invention as defined in claim 1, is a Position Monitoring System that in its preferred embodiment is applied to Alzheimer's patients, but this use in no way limits the application of the invention to other localisation purposes, which is provided with the following items:
1. An Autonomous Locallser, which we shall henceforth call "Localiser", consisting in a portable device with small dimensions, carried by the patients, with two basic functions: a) localisation of the patient by way of a GPS (Global Positioning System), and b) sending the position by mobile phone network to the control centres. It is only activated when the patient surpasses either a radius circumference of a pre-set limited distance, or a pre-set time. The power supply for the device is provided by a rechargeable battery. It is provided with software that is responsible for controlling the localiser and for the calculation corresponding to the algorithm for determining when the patient surpasses the programmed radius and time and for activating communication with the Simple Control Centre.
2. The Programmer-charger, which will henceforth call "Programmer", is a device whose mission is to recharge the battery and program the radius and time of action of the localiser. It is therefore provided with Programmer software whose main function is to control the localiser.
3. Simple Control Centre (SCC). Control centres that verify the number of localisers in a determinate geographical are. Their main mission is to receive alarms and filter any false alarms that may occur. For example, when thepatient is voluntarily transported by his own family outside the programmed area.
4. Complex Control Centre (CCC). Management of all the SCC and transfer of the position given by the SCC to digital maps. Intervention on real alarms. In this case the institution or organisation responsible for the CSCC acts by directly or indirectly aiding patients.

### Brief description of the drawings

In reference to the preferred embodiment of the invention, which is not limitative, but rather an illustrative example to provide a better understanding, the following drawings are attached:

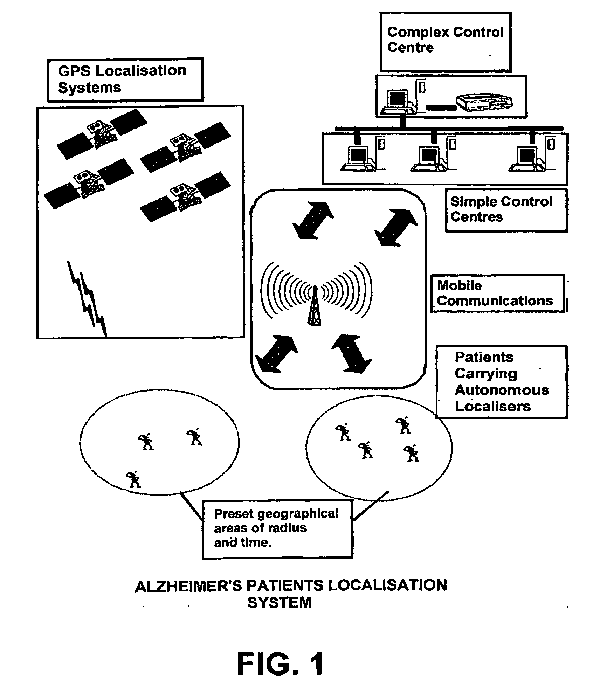

Figure 1 shows a general view of the Position Monitoring System including the Satellite Localising System (GPS) (1), the Complex Control System (CCC) (2), one of the Simple Control Systems (SCC) (3), the Mobile Communication System (4) and the patients carrying the Autonomous Localisers (5) and the relationship among them.

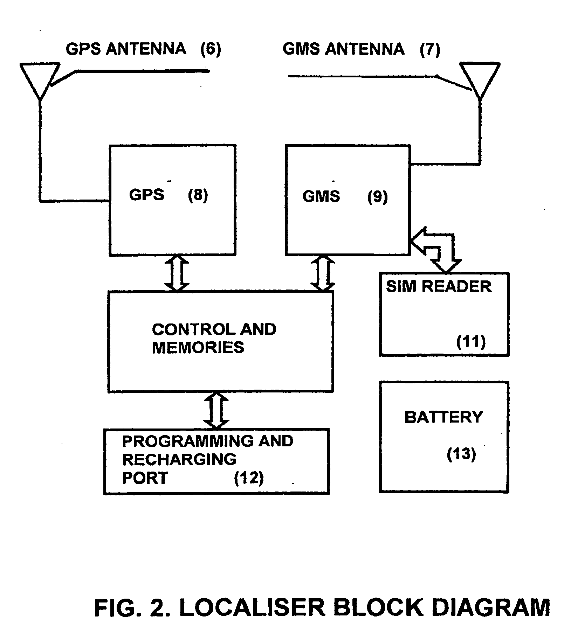

Figure 2 shows a Block Diagram of the Autonomous Localiser where the antennas of the GPS (6) and GSM (7) systems and their respective functional blocks, (8) and (9), the set of Control and Memories (10), the GSM System User Identification Module (SIM) (11), the Programming and Recharging Port (12) and the Battery (13) for supplying power to the set.

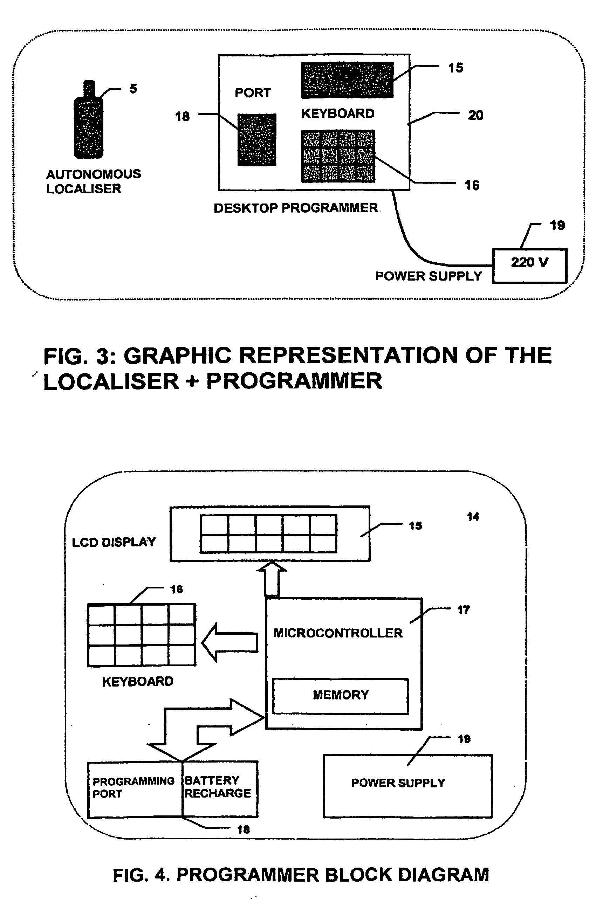

Figure 3 is a schematic representation of the Localiser (5) and of the Programmer (14) showing their interconnection elements such as the programming and loading port of the Localiser (18) and the power supply (19) and its elements of bi-directional communication with the user via a keyboard (16) and a display (15).
Figure 4 shows the block diagram of the Programmer (14), which includes the following elements: a display (15) preferably consisting of a liquid crystal display screen (LCD), a keyboard (16), a control and memories block (17), a port for connecting the localiser (18) in order to program it and recharge its batteries and a power supply module (19) of the blocks cited that extracts the network supply voltage at 220 Vca., as well as the relationships between the different blocks.

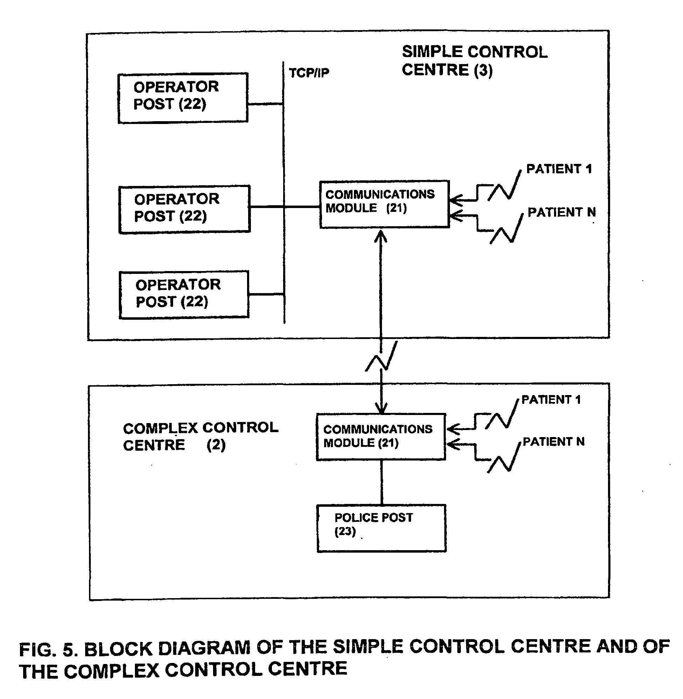

Figure 5 schematically shows, through functional block diagrams, the Software Architecture of the Simple Control Centres (3) and of the Complex Control Centre (2), where the existence of several Communications Modules (21) is shown, which are responsible for managing communications between the localisers (5) and Operator Posts (22) and Police Posts (23) or other Services, such as those associated with the emergency telephone number 112, Civil Defence, etc., and also with the Simple and Complex Control Centres.

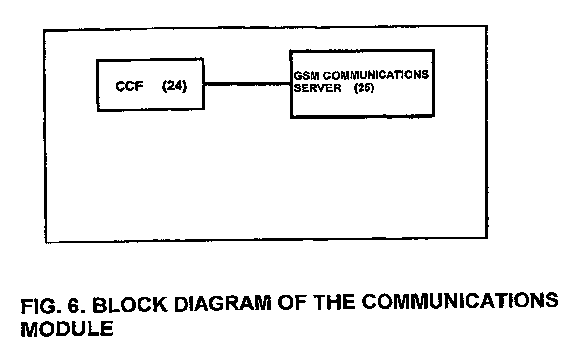

Figure 6 shows the block diagram of the Communications Modules (21) which has two functional blocks, the CCF (24) and the GSM Communications Server (25).

### Description of a preferred embodiment of the invention

A preferred embodiment of the invention is described below, in which it should be noted that it is not limited in any way by this description, so that any progress in the state of the art, in the materials, in mobile or fixed communications systems, in the integration of circuits and other facilities, can be included for the functional realisation of the present invention.

The Localiser (5) determines the position of the patient who carries it with the help of a GPS (Global Positioning System) (6) and (8), by measuring the distance to Geostationary Satellites, making the necessary calculations and also determines with the same system the current local time. If the position of the patient carrying the Localiser (5) and/or the time surpass the programmed limit for either one of them, the cellular mobile phone system GSM (Global System for Mobile communication) (7) and (9), is activated, or any other appropriate technology (UMTS...), which, by making a call sends the data to the position through the mobile communications network to the Simple Control System (3). This is where it is verified whether it is an actual alarm and if so, the command is passed on to the Complex Control System (2), which will take the appropriate steps.

Figure 1 schematically shows the functioning of the invention.

The localiser (5) is a device of small physical dimensions carried by Alzheimer's patients so that their position can be known. The housing is designed in a way that disallows manipulation of its internal functions from the exterior. It is of a resistant material, preferably a derivative of plastic.

This device is based on a Global Positioning System (GPS) (6) and (8), which calculates the position of the patient carrying the Localiser, and on the GSM System (7) and (9) or another Mobile Communication System that may be installed in the future, responsible for sending data to the control centre by way of the mobile phone network.

The localiser (5) has the following basic functions:
- Determination of the position of the patient.
- Communication with the control system.
- Activation of the system when the patient surpasses the programmed action radius
- Activation of the system when the patient surpasses the programmed action time
- Activation of the system as soon as possible and sending the patient position to the Simple (3) or Complex (2) Control Centre, whenever the GPS (6) and (8) lose contact with the satellites and cannot determine the position of the patient due to his/her position (in basement, tunnel, etc.)
   The Localiser (5) has the following characteristics:
   - Autonomous system as it has its own power supply with rechargeable batteries (13).
   - Portable and easily attached to the patient's body.
   - Cannot be activated by carrier. It can only be activated when the radius and/or time of action are surpassed.
   - Radius and Time of action are programmable.
   - The mechanical design avoids involuntary removal of the SIM card.
   - Robust mechanical design, resistant, water-proof, water resistant and with as many other characteristics as considered appropriate for its specialised use.

Figure 2 shows the block diagram of the Localiser (5). Each block is described individually below.

The Global Positioning System (GPS) (8) with its antenna (6) is responsible for calculating the coordinates of the patient carrying the Localiser (6). The signal is received through the antenna from four satellites and determines the coordinates.

In the preferred embodiment that is described it basically includes two integrated circuits:
- The GPS RF, which converts RF signals proceeding from the satellites into digital signals.
- The GPS Signal Processor, which receives the digital signals from the above circuit and processes them to calculate the position coordinates. This integrated circuit is responsible for communicating with the Control Module (10) of the Localiser.

The mobile communication block, which, in this embodiment, is by way of the GSM system (9), and its antenna (7), is responsible for sending the position to the Simple Control Centre (3) via the mobile phone network.

The Control and Memory block (10) is responsible for processing the information received from the GPS (8). Once the position of the Localiser (5) has been updated, it must be compared to the programmed Radius and Time values. In the case that the comparison is out of range, the Control and Memories block (10) activates the GSM block (9) in order to indicate the position to the Simple Control Centre (3). It is also responsible for managing the communications port for programming and recharging the battery.

This module is based preferably on the use of a microcontroller, although a microprocessor and volatile and permanent memories may also be used, either read only and read and write and any other appropriate combination of information processing and saving elements in accordance with the needs of each application and the state of the art. Due to the needs for communication with the GPS (8) and GPM (9) modules and Programmer (14), it is necessary to complement it with series ports.

The Programming and Recharge Port block (12) has basically two functions: the first is to convert the signal levels that come out of the Control and Memories block (10) into others that are adequate for communication with the Programmer (14) in accordance with a series communication standard, and the second is to detect the battery charge level (13) and recharge it in the case that the charge level is below the pre-set limit.

The SIM (Subscriber Identification Module) Card Reader block (11) is designed to be compatible with 3 volt mini SIM cards, available through different cellular mobile phone operators, preferably of GSM standard, although other, future mobile phone technology may be applied. Its function consists, just as in a GSM mobile terminal, of reading the data corresponding to the SIM installed in the Localiser (5) that provide the identification of the user and others.

The mechanical design prevents the involuntary extraction of the SIM card.

The Battery block (13) contains a rechargeable battery, a power level converter and power regulators so as to provide the different supplies that the different blocks may need, which in this preferred embodiment are at 5 and 3.3 volts.

Additionally, the localiser includes a set of Programmes that run in its Control and Memory block (10), responsible for controlling the localiser. Its functions include:
1. Periodically noting the position coordinates of the patient. The period is pre-set by the GPS module (8) chosen. The determination of a new position implies the reception and processing of the satellite signals. The time can vary depending on the system. This functionality is basic for obtaining a portable system, since consumption depends largely on the amount of time the system functions for.
2. When the GPS (8) is unable to determine a position because we are in a tunnel or a screened-off area, the software must determine the new position as soon as possible.
3. Comparison of the current position with the programmed one in order to detect whether the permissible limit for the patient has been surpassed.
4. Comparison of the time that the patient has been out of the house and the programmed one in order to detect whether the permissible limit for the patient has been surpassed.
5. If the action radius or time limit has been surpassed, the software must activate the GSM module to send the position to the Simple Control Centre (3) by making a data call. Once activated, it continues to listen for the instructions that may be sent by the Simple Control Centre (3). In this situation the new positions will be continuously sent until it is deactivated by the Simple Control Centre (3).
6. Checking of the battery charge level (13). If the battery is detected to have a low charge level, the system will be activated by sending the identification, the position and the "low battery" message so that the Simple Control Centre (3) can take the appropriate steps.
7. Communications control by the Programmer (14).
8. Current time clock.

The Programmer (14) is a preferably desktop device, with a power supply element (19) connected to the power network, with a keyboard (16), a display (15) that facilitate the settings of the Localiser (5) and recharging its battery by way of the programming and battery recharge port (18), and a control and memories block (17) for controlling all of its functions.

The Programmer (14) preferably consists of two physical devices: a desktop device (20) with all of the functional blocks of the Programmer except the power supply one, and a power supply (19) connected by cable to the former which extracts the necessary voltages from the 220 Vca network for the supply of the circuits of the Programmer (14) itself, and for recharging the Localiser (5) battery. Both are protected by housings that offer strength and resistance, preferably made of a plastic derivative.

The basic functions of the programmer are:
- Configuring the Localiser (5)
- Programming the Localiser (5) action Radius
- Programming the Localiser (5) action Time
- Checking the state of and charge level of the battery of the Localiser (5)
- Identifying the patient

The main characteristics of the Programmer (14) are:
- It is preferably a desktop device (20), except its power supply (19)
- It has a display (15)
- It is equipped with a keyboard (16)

Figure 3 shows a schematic representation of the Programmer (14) and of the Localiser (5).
Figure 4 shows the functional blocks of the Programmer (14) which we describe in detail below.

The programmer (14) is based on the Control and Memories block (17), which preferably uses a low-cost, high performance microcontroller with built-in memory, in which the program to be run resides, although a microprosser and volatile and permanent memories, either read only and read and write and any other combination appropriate of information processing and storing can be used in accordance with the needs of each application and with the state of the art. This block is in charge of activating the display (15) so as to present the information to the operator, of making a periodic sampling of the keyboard (16) so as to check whether the operator activates any key and of carrying out the information exchange with the localiser (5) by way of the programming port (18).

The keyboard block (16) consists of an alphanumerical keyboard, which facilitates the introduction of numerical values, words and short messages. The user enters the programmable parameters by way of the keyboard: action radius and time.

The display block (15) is preferably constituted by a liquid crystal screen (LCD) that tells the user when to enter the programming values as well as the keys, words and values that are being pressed on the keyboard (16) so they can be visually checked and validated.

The programming and battery recharger port block (18) has two separate functions although directly related to the localiser (5), which are: in the first place, from the programming port the localiser (5) is pre-set by establishing communication between the control and memories block (17) of the programmer (14) and that of control and memories (10) of the localiser (5) by way of appropriate circuits that can preferably be a series standard communications port, or another similar one, and in the second place carries out battery recharge by checking the charge level and when necessary, recharging the battery (13) of the localiser (5), for which is provided with the necessary electronics.

The power supply block (19) is the only one in the programmer (14) that is not included in the desktop device (20), but rather in a separate box which is connected to it by a lead and contains the electronics responsible for converting the network voltage, of 220 Vca in this preferred embodiment, to the continuous voltage values required by the different electronic circuits of the programmer (14).

Additionally, the Programmer (14) includes a set of programs that are run in its Control and Memories block (17), responsible for controlling the programmer. Their main functions are:
- Sampling of the keyboard (16) so as to verify whether the user pushes a key
- Activation of the display (15) showing the messages needed to communicate with the user
- Localiser (5) battery recharge when necessary
- Localiser (5) communication so as to modify programmed radius or time variables

The system also includes two kinds of Control Centres.

In this section the functionality of a Simple Control Centre (3) for Alzheimer's patients, being understood that it refers at all times to patients supplied with Localisers (5).

For this purpose, for each patient, a geographical area considered to be risk-free for the movement of the patient is defined. The system facilitates localising the patient at any time, and more importantly, establishes an alarm mechanism when the patient surpasses the permissible movement radius, even including notifying the local police or other Services, such as those associated with the emergency number 112, Civil Defence, etc.

For this purpose, the following operation is established: when a new patient is registered, as well as his personal information, his habitual area of movement, generally a radius of action around his habitual residence is reported.

When the person concerned surpasses the defined action radius, an alarm is produced, managed in principle by the Simple Control Centre (3). The operator contacts the family of the patient so as to confirm his disappearance, as well as starting to follow him at that moment. Depending on how the incident develops, if necessary, the control of following the patient can be passed on to the Police or to other Services, such as those associated with the emergency number 112, Civil Defence, etc. which are provided with a Complex Control Centre (2).

At any time, upon request by the family, it is possible to reprogram the Action Centre and Radius of movement, for example when the localiser carrier moves to a different residence.

Next, the Localiser (5) must be programmed, so that the user may supply the current address of the patient and the approximate area of movement of the patient that is to be covered.

Based on the details provided for the patient, the operator checks the cartography of the area for the circle that is closest to the area described, and the Action Centre and Radius is calculated and transmitted to the user so that he may enter the details in the Programmer in his own home.

In Figure 5, the Software Architecture of the Control Centres where the following components can be seen:
1. Simple Control Centre (3) consisting of Operator Posts (22) are provided with the software responsible for managing and monitoring patients. Different function categories can be distinguished:
   - Cartography display that in turn includes the following functions:
      - Cartography display parameter setting
      - Display amplifying (ZOOM+) and reduction (ZOOM-), full screen (ALL ZOOM) and display panning (PAN).
      - Cartographic item identification (streets, squares, roads...) by labels
      - Search and inspection of outstanding elements or those of cartographic reference (institutes, police stations, churches, etc.)
   - Data management that also includes the following functions:
      - Maintenance of the information Database related to the patients such as personal information, permissible area of movement and historical registry of events.
      - Representation on cartography of the patient positions received.
      - Localisation of a specific patient.
      - Parametrizable following of a specific patient, mainly from the position signal sending period since it is useless to send it very frequently while the rescuers are not nearby and the battery of the Localiser (5) would be wasted.
      - Position request to the patients' localisers (5).
   - Programming of the localisers (5) by the following operation: the user supplies the address of the current residence and the approximate area that is to be covered. With these details, the area given is located on the cartography and the operator searches for the circular area closest to the requested one. The program, with these data, calculates the Centre and the Radius that define the permissible circular area of movement, and these are communicated by the operator to the user, who enters them into the programmer (14) of the localiser (5) of the patient. This data is stored in the Database.
   - Alarm management that functions in the following way: when the Localiser (5) detects that it is outside of its permissible movement radius or that it is surpassed the pre-set time, it generates an alarm in the Simple Control Centre (3). As a consequence of receiving the alarm, the program carries out the following actions:
      - It notifies the operator with an alarm sound.
      - It creates a window on the Operator Post (22) screen for following the patient that has generated the alarm.
      - It plans out how to follow the patient.

      From this moment on, the recording of the route that the patient is taking is initiated in the Database.
      As a consequence of the alarm, the operator carries out the appropriate actions, contacts the patient's family, so as to finally decide whether it is necessary to communicate the incident related to the patient to the Complex Control Centre (2) (Police).
      If it is decided that the command is to be passed on to the Complex Control Centre (2), the program automatically performs the following actions:
      - It notifies the Complex Control Centre (2) of the details of the patient that has set off the alarm. The communication between the Operator Post (22) and the Police Post (23) is also by way of the Communications Module (21), using GSM short messages.
      - It remotely configures the Localiser (5) so that from that moment on, it periodically sends positions; each time the Simple Control Centre receives a new position for the patient, it is sent to the corresponding Police Post (21), so that we have a replica of the route followed in the two posts.
         The Police Post (23), from this moment on, follows the patient that generated the alarm.
         When the search ends, the Police Post (23) software performs the following actions:
      - It notifies the Simple Control Centre (3) that the emergency has finalised so that it cancels the alarm state for the patient concerned (including the recording in the Database of the Date/Time of the end of the event).
      - It re-establishes the normal functioning of the Operator Post (22) application and the Police Post (23).
   - Interconnection with other modules that facilitates exchanging information with the Communications Module (21) by the TCP/IP network (Transmission Control Protocol / Internet Protocol).

   By way of the Communications Module, it sends and receives information from the patients' localisers (5).
2. Communications Module including the software responsible for maintaining communication between the localisers (5) and the different Simple (3) and Complex (2) Control Centres (Operator Posts (22) and Police Posts (23)). Likewise, it maintains communications between the Simple (3) and the Complex (2) Control Centres.
   Figure 6 shows the architecture of the Communications Module (21). A Communications Module responsible for maintaining communications of the Simple Control Centre (3) (Operator Posts (22)) and another one for the Complex Control Centre (2) (Police Posts (23)) are installed. The means used for communication is preferably mobile communications networks GSM using short messages. The Communications Module (21) consists of two blocks whose functions are described below.
   The CCF block (24) acts as an interface between Management Programs and Communications Servers (25).
   The exchange of information from the CCF (24) with the Management Programs that run in the Operator Posts (22) and Police Posts (23) is carried out by way of a network. Through this means, it receives requests to send messages to the localisers (5) (position request, teleconfiguration,...).
   When the CCF (24) receives from the Communications Server (25) information from a Localiser (5), it sends it by the network with TCP/IP protocol to all the applications that are connected to it at that moment.
   The Communications Server (25) resides and is run in the same computer as the CCF (24). This computer has to be exclusively used for this purpose.
   The communication of the CCF (24) with the Communications Server (25) is by way of COM (Component Object Model) technology; normalised mechanism for creating and using components, facilitating communication among them.
   The Communications Server Block (25) is made up of the software responsible for sending and receiving frames by GSM by way of short messages. It performs information segmenting when needed, since the size of the short message in GSM is limited to 160 characters.
   It facilitates monitoring communications (incoming and outgoing messages).
   It maintains a queue of requests to send messages of the CCF, establishing a retry mechanism for each one of them which is configurable.
3. Complex Control Centre (2)
   Its software is basically the same as that of the Operator Posts (22), with the following peculiarities:
   - When the Complex Control Centre (2) receives an emergency from the Simple Control Centre (3), it registers the patient with the details provided by the latter.
   - Starting from the date the search is ended on, after two days, it removes the patient so that during this interval consultations on the incident may be carried out.

   In order to be able to decide which Police Station each emergency belongs to from this Centre, a superimposable graphic layer is included with the existing Police Stations on it.

## Claims

1. General use position monitoring system that can be used for Alzheimer's patients comprising:
- Autonomous Localisers (5) carried by patients, the localiser consisting of a GPS module (6, 8), a GSM module (7, 9), a control and memory module (10), a SIM reader module (11), a programming and charging port (12) and a battery (13) protected by a housing made of a resistant material and a Localiser software responsible for controlling the Localiser (5);
- Programmers (14), in form of desktop devices, responsible for programming the Localiser (5) and charging its battery (13), the programer including: a robust housing made of resistant material, a display (15), a keyboard (16), a control and memory block (17), a port (18) for programming and battery charging of the Localiser (5), and in a separate box although connected by a cable, the power supply assembly (19) from the primary energy source and a Programmer (14) software, responsible for controlling the Programmer;
- Simple Control Centre (3) responsible for managing the alarms generated by the Localisers (5), comprising one or several Operator Stations (22) whose main functions are cartography display, patient details management, alarm management and transfer of alarms to a Complex Control Centre; and a Communication Module (21) which consists of a CCF (24) or interface between the management program and a Communication Server (25) and the Communication Server (25) itself, responsible for communicating with Localisers (5) by way of GSM short message service:
- Complex Control Centre (2) comprising a Police Station (23), whose software is substantially the same as that of the Operator Station (22), and a Communication Module (21);
the system **characterised in that** the Localiser (5) calculates continously by itself without any communication if it is situated either inside predefined space and time limits or outside, transmitting an alarm to the Simple Control Centre (3) in case those limits were exceeded.

2. General use position monitoring system that can be used for Alzheimer's patients according to claim 1, **characterised in that** the Localiser (5) captures and processes data about its geographical location and time through the GPS module (6, 8).

3. General use position monitoring system that can be used for Alzheimer's patients according to claim 1, **characterised in that** the Localiser (5) can make and receive data calls by way of the GSM module (7, 9), using the short message communications service.

4. General use position monitoring system that can be used for Alzheimer's patients according to claim 1, **characterised in that** said space limit is stored in the Localiser (5) memory as a center and a radius of a circular area inside which, the movement is allowed.

5. General use position monitoring system that can be used for Alzheimer's patients according to claim 1, **characterised in that** said time limit is stored in the Localiser (5) memory as a predefined time interval allowed since it was separated from the Programmer (14).

6. General use position monitoring system that can be used for Alzheimer's patients according to claims 4 and 5, **characterised in that** said center, radius and time interval are loaded into the Localiser (5) by the Programmer (14)

7. General use position monitoring system that can be used for Alzheimer's patients according to claims 2 and 3, **characterised in that** the Localiser (5) can be reprogrammed by the Simple Control Centre (3) by way of the short message communication service GSM so that it periodically sends out its location in order to track its route.

8. General use position monitoring system that can be used for Alzheimer's patients according to claim 3, **characterised in that** the alarms of the Localiser (5) are received in the Simple Control Centre (3) by way of the cellular mobile phone network GSM by the short message service.

9. General use position monitoring system that can be used for Alzheimer's patients according to claim 7, **characterised in that** the Simple Control Centre (3) graphically shows the route followed by the Localiser (5) carrier over a map of the city or terrain.

10. General use position monitoring system that can be used for Alzheimer's patients according to claim 6, **characterised in that** being defined the geographical area where the patient is allowed to move, the Simple Control Centre (3) calculates said center, radius and time interval for programming of the Localiser (5), wherein said parameters are entered through the Programmer (14).

## Patentansprüche

1. Bewegungsüberwachungssystem zur allgemeinen Nutzung, das bei Alzheimerpatienten eingesetzt werden kann:
• Eigenständige Ortungsvorrichtungen (5), die vom Patienten getragen werden und aus einem GPS-Modul (6, 8), einem GSM-Modul (7, 9), einem Steuerungs- und Speichermodul (10), einem SIM-Kartenlesermodul (11), einem Programmierungs- und Ladeanschluss (12) und einem Akku (13) bestehen, wobei diese Ortungsvorrichtung von einem Gehäuse aus robustem Material umhüllt ist sowie mit einer Software ausgestattet ist, die für die Steuerung der Ortungsvorrichtung (5) dient;
• Programmierungsvorrichtungen (14) in Form von Tischgeräten, die zum Programmieren der Ortungsvorrichtung (5) sowie zum Laden des zugehörigen Akkus (13) dienen, wobei die Programmiervorrichtung aus folgenden Elementen besteht: einem robusten Gehäuse aus beständigem Material, einem Bildschirm (15), einer Tastatur (16), einer Steuerungs- und Speichereinheit (17), einem Anschluss (18) zum Programmieren und Aufladen des Akkus der Ortungsvorrichtung (5), ein separates, jedoch anhand eines Kabels mit der Programmiervorrichtung verbundenes Netzgerät (19) für die Hauptenergiequelle sowie eine Programmierungssoftware (14) für die Steuerung der Programmiervorrichtung;
• Nebenüberwachungszentralen (3), die zur Auswertung der von den Ortungsvorrichtungen (5) ausgelösten Warnmeldungen dienen und aus jeweils einer oder mehreren Bedienerstationen (22) bestehen, deren Hauptfunktionen darin bestehen, kartografische Einzelheiten anzuzeigen, Patientenmerkmale zu verwalten, Warnmeldungen auszuwerten sowie Warnmeldungen an eine Hauptüberwachungsstation und ein Kommunikationsmodul (21) zu übertragen, welches aus einem Grundrahmen (24) oder einer Schnittstelle zwischen dem Verwaltungsprogramm und einem Kommunikationsserver (25) sowie dem Kommunikationsserver (25) an sich besteht, welcher für die Datenübertragung von und zu den Ortungsvorrichtungen (5) mittels GSM-Kurznachrichtendienst (SMS) verantwortlich ist;
• Hauptüberwachungsstation (2) bestehend aus einer Polizeistation (23), deren Software in der Grundsubstanz mit jener der Bedienerstation (22) identisch ist, und einem Kommunikationsmodul (21);
wobei das gesamte System **dadurch gekennzeichnet ist, dass** die Ortungsvorrichtung (5) ohne jedwede Kommunikationsverbindung kontinuierlich eigenständige Berechnungen vornimmt, wobei diese sich dabei innerhalb oder außerhalb bestimmter vorprogrammierter räumlicher und zeitlicher Limits befinden kann und bei Übertretungen der besagten Begrenzungen eine Warnmeldung an die Nebenüberwachungsstation (3) sendet.

2. Bewegungsüberwachungssystem zur allgemeinen Nutzung, das bei Alzheimerpatienten eingesetzt werden kann gemäß Patentanspruch 1, **dadurch gekennzeichnet, dass** die Ortungsvorrichtung (5) über das GPS-Modul (6, 8) zeitliche Daten sowie Daten bezüglich des geografischen Standorts empfängt und verarbeitet.

3. Bewegungsüberwachungssystem zur allgemeinen Nutzung, das bei Alzheimerpatienten eingesetzt werden kann gemäß Patentanspruch 1, **dadurch gekennzeichnet, dass** die Ortungsvorrichtung (5) über das GSM-Modul (7, 9) mithilfe des Kurznachrichtenkommunikationsdiensts (SMS) Datenmeldungen versenden und empfangen kann.

4. Bewegungsüberwachungssystem zur allgemeinen Nutzung, das bei Alzheimerpatienten eingesetzt werden kann gemäß Patentanspruch 1, **dadurch gekennzeichnet, dass** die besagten örtlichen Begrenzungen im Datenspeicher der Ortungsvorrichtung (5) in Form eines Mittelpunkts sowie eines bestimmten geometrischen Radius abgespeichert sind, innerhalb welchem Ortsveränderungen gestattet sind.

5. Bewegungsüberwachungssystem zur allgemeinen Nutzung, das bei Alzheimerpatienten eingesetzt werden kann gemäß Patentanspruch 1, **dadurch gekennzeichnet, dass** die besagten zeitlichen Begrenzungen im Datenspeicher der Ortungsvorrichtung (5) in Form eines vorprogrammierten Zeitintervalls abgespeichert sind, innerhalb welchem Bewegungen gestattet sind, wobei die Zeitnehmung beginnt, sobald dieselbe von der Programmiervorrichtung (14) abgekoppelt wird.

6. Bewegungsüberwachungssystem zur allgemeinen Nutzung, das bei Alzheimerpatienten eingesetzt werden kann gemäß Patentansprüchen 4 und 5, **dadurch gekennzeichnet, dass** alle Daten bezüglich des besagten Mittelpunkts, des besagten Radius und des besagten Zeitintervalls von der Programmiervorrichtung (14) auf die Ortungsvorrichtung (5) geladen werden.

7. Bewegungsüberwachungssystem zur allgemeinen Nutzung, das bei Alzheimerpatienten eingesetzt werden kann gemäß Patentansprüchen 2 und 3, **dadurch gekennzeichnet, dass** die Ortungsvorrichtung (5) über die Nebenüberwachungsstation (3) anhand des GSM-Kurznachrichtenkommunikationsdienstes so umprogrammiert werden kann, dass diese in regelmäßigen Abständen ihre Standortdaten übermittelt, wodurch alle Ortsveränderungen mitverfolgt werden können.

8. Bewegungsüberwachungssystem zur allgemeinen Nutzung, das bei Alzheimerpatienten eingesetzt werden kann gemäß Patentanspruch 3, **dadurch gekennzeichnet, dass** die Warnmeldungen der Ortungsvorrichtung (5) von der Nebenüberwachungsstation (3) über das GSM-Mobiltelefonnetz anhand des Kurznachrichtendiensts (SMS) empfangen werden.

9. Bewegungsüberwachungssystem zur allgemeinen Nutzung, das bei Alzheimerpatienten eingesetzt werden kann gemäß Patentanspruch 7, **dadurch gekennzeichnet, dass** die Nebenüberwachungsstation (3) alle Ortsveränderungen des Trägers der Ortungsvorrichtung (5) auf einem Stadtplan oder einer Landkarte anhand von geografischen Daten anzeigt.

10. Bewegungsüberwachungssystem zur allgemeinen Nutzung, das bei Alzheimerpatienten eingesetzt werden kann gemäß Patentanspruch 6, **dadurch gekennzeichnet, dass** nach Eingrenzung des geografischen Bereichs, innerhalb welchem Ortsveränderungen seitens des Patienten erlaubt sind, die Nebenüberwachungsstation (3) jenen besagten Mittelpunkt, jenen besagten Radius und jenes besagte Zeitintervall berechnet, damit die Ortungsvorrichtung (5) programmiert werden kann, wobei diese besagten Parameter über die Programmiervorrichtung (14) auf derselben abgespeichert werden.

## Revendications

1. L'usage courant du système de contrôle de position qui peut être utilisé par les patients d'Alzheimer comprenant :
• Localisateurs Autonomes (5) portés par les patients, le localisateur contenant un module GPS (6,8), un module GSM (7,9), un module de contrôle et mémoire (10), un module lecteur SIM (11), un port de programmation et charge (12) et une batterie (13) protégée par un boîtier d'un matériel résistant et un Localisateur Software responsable de contrôler le Localisateur (5) ;
• Programmateurs (14), en format de dispositifs de bureau, responsable de la programmation du Localisateur (5) et de la charge de sa batterie (13), le programmateur comprenant: un solide boîtier en matériel résistant, un moniteur (15), un clavier (16), un bloc de contrôle et de mémoire (17), un port (18) pour la programmation et la charge de la batterie du Localisateur (5) et dans une boîte écartée, connectée aussi par un câble, l'ensemble de distribution de la puissance (19) à partir de la source première d'énergie et un Programmateur (14) Software, responsable de contrôler le Programmateur ;
• Centre de Contrôle Simple (3) responsable de la direction des alarmes créées par les Localisateurs (5), comprenant une ou diverses Stations Opératrices (22) dont les principales fonctions sont le déploiement cartographique, la direction détaillée du patient, la direction des alarmes et le transfert des alarmes au Centre de Contrôle Complexe et un Module de Communication (21) qui consiste dans un CCF (24) ou interface entre le programme de direction et un Serveur de Communication (25) et le Serveur de Communication (25) lui-même, responsable de la communication avec les Localisateurs (5) à travers un service GSM de court message ;
• Centre de Contrôle Complexe (2) comprenant une Station de Police (23) dont le Software est essentiellement le même que ce de la Station Opératrice (22) et ce du Module de Communication (21) ;
le système **caractérisé en ce que** le Localisateur (5) calcule lui-même de façon continue, sans aucune communication, s'il est placé dans un espace prédéterminé et dans les limites du temps ou en dehors, transmettant une alarme au Centre du Contrôle Simple (3) dans le cas où ces limites seraient dépassées.

2. L'usage courant du système de contrôle de position qui peut être utilisé par les patients d'Alzheimer selon la revendication 1, **caractérisé en ce que** le Localisateur (5) saisit et traite les données relatives à sa situation géographique et au temps, à travers le module GPS (6,8).

3. L'usage courant du système de contrôle de position qui peut être utilisé par les patients d'Alzheimer selon la revendication 1, **caractérisé en ce que** le Localisateur (5) peut émettre et recevoir des appels de données par le module GSM (7, 9), en utilisant le service de communication de court message.

4. L'usage courant du système de contrôle de position qui peut être utilisé par les patients d'Alzheimer selon la revendication 1, **caractérisé en ce que** ledit espace limite est enregistré dans le Localisateur (5) mémoire tel qu'un centre et un rayon à l'intérieur d'une surface circulaire où le mouvement est permis.

5. L'usage courant du système de contrôle de position qui peut être utilisé par les patients d'Alzheimer selon la revendication 1, **caractérisé en ce que** ledit temps limite est enregistré dans le Localisateur (5) mémoire comme l'intervalle de temps prédéterminé autorisé dès qu'il s'éloigne du Programmateur (14).

6. L'usage courant du système de contrôle de position qui peut être utilisé par les patients d'Alzheimer selon les revendications 4 et 5, **caractérisé en ce que** le centre, le rayon et l'intervalle de temps mentionnés sont sauvegardés dans le Localisateur (5) par le Programmateur (14).

7. L'usage courant du système de contrôle de position qui peut être utilisé par les patients d'Alzheimer selon les revendications 2 et 3, **caractérisé en ce que** le Localisateur (5) peut être reprogrammé par le Centre de Contrôle Simple (3) à travers le service de communication GSM de court message, il envoie donc périodiquement son positionnement afin que son trajet soit montré.

8. L'usage courant du système de contrôle de position qui peut être utilisé par les patients d'Alzheimer selon la revendication 3, **caractérisé en ce que** les alarmes du Localisateur (5) sont reçues dans le Centre de Contrôle Simple (3) à travers un téléphone mobil network GSM par le service de court message.

9. L'usage courant du système de contrôle de position qui peut être utilisé par les patients d'Alzheimer selon la revendication 7, **caractérisé en ce que** le Centre de Contrôle Simple (3) montre graphiquement le parcours réalisé par le Localisateur (5) porté sur une carte de la ville ou de l'endroit.

10. L'usage courant du système de contrôle de position qui peut être utilisé par les patients d'Alzheimer selon la revendication 6, **caractérisé en ce que**, étant définie la zone géographique où le patient est permis de se déplacer, le Centre de Contrôle Simple (3) calcule lesdits centre, rayon et intervalle de temps pour la programmation du Localisateur (5) dans lequel les paramètres indiqués sont gardés par le Programmateur (14).
